# EUROPEAN PATENT APPLICATION

(11) **EP 3 505 581 A1**
(43) Date of publication of application: **03.07.2019**
(21) Application number: 17846189.3
(22) Date of filing: 21.08.2017
(51) Int. Cl.: C09J 7/00, C08F 8/04, C08F 8/42, C09J 153/02, C09J 201/00

(54) **METHOD FOR PRODUCING ADHESIVE SHEET**

(30) Priority: 29.08.2016 JP 2016167189
(71) Applicant: Zeon Corporation, Tokyo 100-8246 (JP)
(72) Inventor: KURIHARA Ryuta, Tokyo 100-8246 (JP); KOHARA Teiji, Tokyo 100-8246 (JP)
(74) Representative: Hansen, Norbert
(86) International application number: PCT/JP2017/029795
(87) International publication number: WO 2018/043182

(57) **Abstract**

Disclosed is a method for manufacturing a double side embossed adhesive sheet which comprises a thermoplastic resin as a main component, the method including: contacting one side of a melt which comprises a thermoplastic resin as a main component, extruded from a die, with a surface of a cast roll having an embossed shape on the surface while nipping the melt from an opposite side with a nip roll having an embossed shape on a surface thereof, wherein one of the cast roll and the nip roll is made of metal and the other is made of rubber.

## Description

### TECHNICAL FIELD

The present disclosure relates methods for producing an adhesive sheet which comprises a thermoplastic resin as a main component, has low thermal shrinkage and good blocking resistance and can increase the work efficiency.

### BACKGROUND

Polyvinyl acetal resin sheets have been known to be useful as adhesive sheets for laminated glass.

For example, PTL 1 and PTL 2 disclose using, as polyvinyl acetal resin adhesive sheets for laminated glass, those sheets that show small thermal shrinkage in order to reduce air bubbles or unfilled space at the edge and reduce warping at the glass edge surface. PTL 1 and PTL 2 also disclose stabilizing sheet thermal shrinkage by adding organic acid salts of divalent or higher valent metals to polyvinyl acetal resins, and winding the molded sheet into roll form immediately following extrusion after cooling only the surface of the sheet. Further, PTL 1 and PTL 2 disclose embossing the surface of the sheet in order to increase the degassing performance during lamination with glass.

PTL 3 discloses using a polyvinyl acetal interlayer film that shows low thermal expansion in the TD direction (i.e., direction perpendicular to extrusion direction) and low thermal shrinkage in the MD direction (i.e., direction parallel to extrusion direction) so that the interlayer film does not extend outwardly from between glass plates during a pre-pressure bonding step of a laminated glass manufacturing process. For the purpose of producing such an interlayer film having small thermal expansion and thermal shrinkage, D3 also discloses reducing, during sheet molding, the speed difference among rolls through which a resin film discharged from an extruder mold passes before being rolled up.

PTLS 4 to 6 disclose that specific alkoxysilyl group-containing modified hydrogenated block copolymers can be utilized in applications where adhesion is required, such as solar cell sealing materials, laminated glass interlayer films, and sealing materials for organic electroluminescent devices.

Among PTLS 4 to 6, PTL 5 discloses that an adhesive sheet comprising a specific alkoxysilyl group-containing modified hydrogenated block copolymer shows good adhesion to glass, good light resistance, good heat resistance and good optical characteristics, and that the adhesive sheet is easy to handle and provides stable adhesion without requiring special water content management to control its adhesion to glass, which is considered essential for polyvinyl acetal resin sheets.

PTL 5 also discloses a production example of a sheet having an embossed shape on one side.

### CITATION LIST

### Patent Literature

PTL 1: WO2012133668A
PTL 2: JP2013091793A
PTL 3: WO2016052609A
PTL 4: WO2012043708A
PTL 5: WO2013176258A
PTL 6: WO2014091941A

### SUMMARY

### (Technical Problem)

However, production of adhesive sheets with the prior art methods described above using thermoplastic resins such as the specific alkoxysilyl group-containing modified hydrogenated block copolymers presented a problem described below.

For example, when adhesive sheets having an embossed shape only on one side as described in PTL 5 are used for the manufacture of, for example, lightweight laminated glass that comprises thin glass plates, alignment is difficult to perform because of poor slipperiness that occurs when the thin glass plates contacted with a non-embossed, smooth surface of the adhesive sheet or when smooth surfaces of the adhesive sheets contacted with each other. This sometimes caused a significant reduction in the work efficiency.

This led to the present inventors to consider that when an adhesive sheet made of thermoplastic resin such as the specific alkoxysilyl group-containing modified hydrogenated block copolymer is used to manufacture laminated glass, it is preferred to use such an adhesive sheet that has an embossed shape on both sides.

In an aim to provide an embossed shape on both sides of an adhesive sheet made of thermoplastic resin such as the specific alkoxysilyl group-containing modified hydrogenated block copolymer, the present inventors transferred an embossed shape to both sides of a thermoplastic resin melt extruded from a die by contacting the both sides of the melt respectively with two metallic rolls having an embossed shape on the surface. As a result, it was discovered that the resulting sheet tends to show high thermal shrinkage.

According to the studies conducted by the present inventors, it was discovered that when an adhesive sheet having high thermal shrinkage is used to manufacture laminated glass, air bubbles or unfilled space easily occur at the edge of the laminated glass. It was also discovered that when an adhesive sheet having high thermal shrinkage is used to manufacture lightweight laminated glass formed of thin glass plates, there is concern of warping occurring at the edge surface.

In addition, according to the studies conducted by the present inventors, it was also discovered that when heated embossing rolls are to be used to provide an embossed shape on non-embossed both sides of a pre-molded adhesive sheet made of thermoplastic resin such as the specific alkoxysilyl group-containing modified hydrogenated block copolymer, transfer of the embossed shape is poor and it takes time for the embossed shaped to be sufficiently transferred to both sides of the sheet, resulting in failure to obtain sufficient productivity.

The present disclosure was made in consideration of such a circumstance. An object of the present disclosure is therefore to provide a method for producing a double side embossed adhesive sheet which has low thermal shrinkage and can be produced with high efficiency.

### (Solution to Problem)

To achieve the foregoing object, the present inventors made extensive studies on the method for producing a double side embossed adhesive sheet which comprises as a main component a thermoplastic resin such as an alkoxysilyl group-containing modified hydrogenated block copolymer.

As a result, the present inventors discovered that a double side embossed adhesive sheet having low thermal shrinkage can be efficiently molded by contacting one side of a melt which comprises a thermoplastic rein as a main component, extruded from a die such as a T-die, with a surface of a cast roll having an embossed shape on the surface while nipping the melt from the opposite side with a nip roll having an embossed shape on the surface, with one of the cast roll and the nip roll being made of metal and the other being made of rubber. The present inventors thus completed the present disclosure.

According the present disclosure, there are provided methods for producing an adhesive sheet given items [1] to [3] below.
[1] A method for producing a double side embossed adhesive sheet which comprises a thermoplastic resin as a main component, the method including:
   contacting one side of a melt which comprises a thermoplastic resin as a main component, extruded from a die, with a surface of a cast roll having an embossed shape on the surface while nipping the melt from an opposite side with a nip roll having an embossed shape on a surface thereof,
   wherein one of the cast roll and the nip roll is made of metal and the other is made of rubber.
[2] The method of [1], wherein the cast roll is made of metal and the nip roll is made of rubber.
[3] The method of [1] or [2], wherein the thermoplastic resin is a modified hydrogenated block copolymer [E] obtained by introducing an alkoxysilyl group into a hydrogenated block copolymer [D], the hydrogenated block copolymer [D] being obtained by hydrogenating a block copolymer [C] comprising at least two polymer blocks [A] which comprise as a main repeating unit a repeating unit derived from an aromatic vinyl compound, and at least one polymer block [B] which comprises as a main repeating unit a repeating unit derived from a chain conjugated diene compound.

### (Advantageous Effect)

The method of the present disclosure for producing an adhesive sheet is highly productive because an embossed shape is provided on both sides of a sheet in a production process in which a molten resin is shaped into sheet.

The adhesive sheet obtained by the production method of the present disclosures shows low thermal shrinkage at temperatures used for example in a production process of a laminate such as laminated glass. Thus, when laminated glass is manufactured using this adhesive sheet, air bubbles or unfilled space do no easily occur at the edge of the laminated glass. Further, when lightweight laminated glass formed of thin glass plates is manufactured using this adhesive sheet, warping does not easily occur at the edge surface.

Because the adhesive sheet obtained by the production method of the present disclosure has an embossed shape on both sides, blocking does not easily occur (i.e., the adhesive sheet has good blocking resistance) even when the adhesive sheet is stored for a long period of time in roll form.

Further, when a laminate such as laminated glass is to be manufactured using this adhesive sheet, alignment is easy because favorable slipperiness is established between the glass surface and adhesive sheet surface or, when a plurality of such adhesive sheets is used, between the plurality of adhesive sheets. Thus, the adhesive sheet provides good work efficiency.

### BRIEF DESCRIPTION OF THE DRAWINGS

In the accompanying drawings:
FIG. 1 is a schematic view of a production method of the present disclosure using a T-die type film melt extrusion molding machine;
FIG. 2 is a schematic view showing a cross section of a laminate [M]; and
FIG. 3 is an enlarged schematic view showing an edge surface portion of a laminate [M].

### DETAILED DESCRIPTION

The method of the present disclosure for producing an adhesive sheet is directed to produce a double side embossed adhesive sheet which comprises a thermoplastic resin as a main component, wherein one side of a melt which comprises a thermoplastic rein as a main component, extruded from a die such as a T-die, is contacted with a surface of a cast roll having an embossed shape on the surface while nipping the melt from the opposite side with a nip roll having an embossed shape on the surface, to thereby provide an embossed shape on both sides. In the production method of the present disclosure, one of the cast roll and the nip roll is made of metal and the other is made of rubber.

### [Thermoplastic Resin]

Thermoplastic resins for use as a main component of an adhesive sheet obtained by the production method of the present disclosure can be any thermoplastic resin which may be used as an adhesive. Thermoplastic resins may be used singly or in combination of two or more kinds.

The term "main component" as used herein means a component accounting for 65% by weight or more, preferably 70% by weight or more, more preferably 75% by weight or more, of the whole.

### <Glass Transition Temperature and Melting Point>

When the thermoplastic resin used in the present disclosure is an amorphous resin, it is preferred to use such an amorphous resin that has a glass transition temperature (Tg) (highest glass transition temperature when the thermoplastic resin has more than one glass transition temperature) of 50°C or higher and 150°C or lower. When the thermoplastic resin used in the present disclosure is a crystalline resin, it is preferred to use such a crystalline resin that has a melting point (Tm) of 90°C or higher and 150°C or lower.

The glass transition temperature and the melting point can be measured according to the methods described in Examples.

### <Type>

Examples of thermoplastic resins include modified hydrogenated block copolymers having an alkoxysilyl group, an acid anhydride group or the like; modified polyolefin resins having an alkoxysilyl group, an acid anhydride group or the like; polyvinyl acetal resins; polyvinyl butyral resins; ethylene-vinyl acetate copolymer resins; ethylene-acryl copolymer resins; polyurethane resins; and polyvinyl alcohol resins.

Preferred are modified polyolefin resins having an alkoxysilyl group and modified hydrogenated block copolymers having an alkoxysilyl group because adhesion to glass does not decrease even in a high temperature and high humidity environment, with modified hydrogenated block copolymers having an alkoxysilyl group being particularly preferred because of their good transparency and good low-temperature impact resistance.

### «Modified Polyolefin Resin Having Alkoxysilyl Group»

The modified polyolefin resin having an alkoxysilyl group is a polymer obtained by introducing an alkoxysilyl group into an unmodified polyolefin resin, with the proviso that those corresponding to the "modified hydrogenated block copolymer having an alkoxysilyl group" described later are excluded.

Examples of unmodified polyolefin resins (hereinafter may be simply referred to simply as "polyolefin resins") include homopolymers or copolymers having a repeating unit derived from C2-C30 σ-olefin such as ethylene, propylene, 1-butene, 1-hexene, 4-methyl-1-pentene, or 1-octene.

Examples of alkoxysilyl groups to be introduced into polyolefin resins include trialkoxysilyl group such as trimethoxysilyl group, triethoxysilyl group, and tripropoxysilyl group; alkyldialkoxysilyl group such as methyldimethoxysilyl group, methyldiethoxysilyl group, ethyldimethoxysilyl group, ethyldiethoxysilyl group, propyldimethoxysilyl group, and propyldiethoxysilyl group; dialkylalkoxysilyl group such as dimethylmethoxysilyl group, dimethylethoxysilyl group, diethylmethoxysilyl group, diethylethoxysilyl group, dipropylmethoxysilyl group, and dipropylethoxysilyl group; and aryldialkoxysilyl group such as phenyldimethoxysilyl group and phenyldiethoxysilyl group. Preferred are trialkoxysilyl group and alkyldialkoxysilyl group from the viewpoint of, for example, availability of raw materials for production.

The amount of the alkoxysilyl group introduced is usually 0.1 parts by weight or more and 10 parts by weight or less, preferably 0.2 parts by weight or more and 5 parts by weight or less, more preferably 0.3 parts by weight or more and 3 parts by weight or less, per 100 parts by weight of the polyolefin resin. The amount of the alkoxysilyl group introduced can be calculated from the measurement data of a ¹H-NMR spectrum.

Any method can be used to introduce the alkoxysilyl group into the polyolefin resin. For example, introduction can be achieved by reacting the polyolefin resin with an ethylenically unsaturated silane compound in the presence of an organic peroxide.

Any organic peroxide can be used as long as it has a function as a radical reaction initiator. Examples of organic peroxides include dibenzoyl peroxide, t-butyl peroxyacetate, 2,2-di-(t-butylperoxy)butane, t-butyl peroxybenzoate, t-butyl cumyl peroxide, dicumyl peroxide, di-t-hexyl peroxide, 2,5-dimethyl-2,5-di(t-butylperoxy)hexane, di-t-butyl peroxide, t-butyl hydroperoxide, t-butylperoxy isobutyrate, lauroyl peroxide, dipropionyl peroxide, and p-menthane hydroperoxide. These organic peroxides can be used singly or in combination of two or more kinds.

Examples of ethylenically unsaturated silane compounds include vinyl group-containing alkoxysilane such as vinyltrimethoxysilane, vinyltriethoxysilane, dimethoxymethylvinylsilane, and diethoxymethylvinylsilane; allyl group-containing alkoxysilane such as allyltrimethoxysilane and allyltriethoxysilane; p-styryl group-containing alkoxysilane such as p-styryltrimethoxysilane and p-styryltriethoxysilane; 3-methacryloxypropyl group-containing alkoxysilane such as 3-methacryloxypropyltrimethoxysilane, 3-methacryloxypropylmethyldimethoxysilane, 3-methacryloxypropyltriethoxysilane, and 3-methacryloxypropylmethyldiethoxysilane; 3-acryloxypropyl group-containing alkoxysilane such as 3-acryloxypropyltrimethoxysilane and 3-acryloxypropyltriethoxysilane; and 2-norbornene-5-yl group-containing alkoxysilane such as 2-norbornene-5-yltrimethoxysilane.

Any method can be used to react the polyolefin resin with the ethylenically unsaturated silane compound in the presence of the organic peroxide. It is preferred to employ a method that uses a device capable of continuously performing heating, kneading and extrusion, such as a twin-screw kneader. For example, a mixture containing the polyolefin resin, the ethylenically unsaturated silane compound and the organic peroxide is heat-melted at a melting temperature of the polyolefin resin or higher in a twin-screw kneader and then kneaded for a desired time to effect a target reaction.

The heating and kneading temperature is usually 180°C or higher and 230°C or lower, preferably 190°C or higher and 210°C or lower, more preferably 200°C or higher and 210°C or below. When the heating and kneading temperature falls within this temperature range, the polyolefin resin has a moderate melt viscosity, so that kneading is easy and alkoxysilyl groups advantageously remain unreacted.

The heating and kneading time is usually about 0.3 minutes or more and about 5 minutes or less, preferably about 0.5 minutes or more and about 3 minutes or less, more preferably about 0.7 minutes or more and about 2 minutes or less. The heating and kneading time can be appropriately determined such that usually 80% by weight or more, preferably 90% by weight or more, more preferably 95% by weight or more of the organic peroxide used decomposes. The decomposition ratio of the organic peroxide can be estimated from the value of the half-life of the peroxide at a predetermined temperature.

When using continuous kneading equipment such as a twin-screw kneader or a short distance extruder, kneading and extrusion may be carried out continuously so that the residence time falls within the range above.

### «Modified Hydrogenated Block Copolymer having Alkoxysilyl Group»

The modified hydrogenated block copolymer having an alkoxysilyl group is a polymer obtained by introducing an alkoxysilyl group into an unmodified hydrogenated block copolymer.

The modified hydrogenated block copolymer having an alkoxysilyl group can be obtained similarly to the foregoing modified polyolefin resin having an alkoxysilyl group except that an unmodified hydrogenated block copolymer is used instead of an unmodified polyolefin resin.

The preferred amount of the alkoxysilyl group introduced is similar to that for the modified polyolefin resin having an alkoxysilyl group.

Examples of modified hydrogenated block copolymers having an alkoxysilyl group include a modified hydrogenated block copolymer [E] obtained by introducing an alkoxysilyl group into a hydrogenated block copolymer [D] obtained by hydrogenating a block copolymer [C] comprising at least two polymer blocks [A] which comprise as a main repeating unit a repeating unit derived from an aromatic vinyl compound, and at least one polymer block [B] which comprises as a main repeating unit a repeating unit derived from a chain conjugated diene compound; and a modified hydrogenated block copolymer [J] obtained by introducing an alkoxysilyl group into a hydrogenated block copolymer [H] obtained by hydrogenating a block copolymer [G] comprising at least two polymer blocks [A] which comprise as a main repeating unit a repeating unit derived from an aromatic vinyl compound, and at least one polymer block [F] which comprises as a main repeating unit a repeating unit derived from isobutene. A preferred modified hydrogenated block copolymer having an alkoxysilyl group is the modified hydrogenated block copolymer [E] described above.

As used herein, the term "main repeating unit" means a repeating unit that usually accounts for 70% by weight or more, preferably 80% by weight or more, more preferably 90% by weight or more, of the whole of the block.

### -Polymer Block [A]-

The polymer block [A] is a polymer block that comprises a structural unit derived from an aromatic vinyl compound as a main component. The amount of the structural unit derived from an aromatic vinyl compound in the polymer block [A] is preferably 90% by mass or more, more preferably 95% by mass or more, even more preferably 99% by mass or more. The polymer block [A] may comprise a structural unit other than the structural unit derived from an aromatic vinyl compound. Examples of structural units other than the structural unit derived from an aromatic vinyl compound include a structural unit derived from a chain conjugated diene and/or a structural unit derived from other vinyl compound. The amount of the structural unit other than the structural unit derived from an aromatic vinyl compound in the polymer block [A] is usually 10% by mass or less, preferably 5% by mass or less, more preferably 1% by mass or less.

If the amount of the structural unit derived from an aromatic vinyl compound in the polymer block [A] is too small, for example, there is concern that the support strength or rigidity of a laminate or structure manufactured using the adhesive sheet is insufficient.

The polymer blocks [A] contained in the block copolymer [C] may be the same or different as long as they satisfy the content range above.

### -Polymer Block [B]-

The polymer block [B] is a polymer block that comprises as a main component a structural unit derived from a chain conjugated diene compound. The amount of the structural unit derived from a chain conjugated diene compound in the polymer block [B] is usually 70% by mass or more, preferably 80% by mass or more, more preferably 90% by mass or more. The polymer block [B] may contain a structural unit other than the structural unit derived from a chain conjugated diene compound. Examples of structural units other than the structural unit derived from a chain conjugated diene compound include a structural unit derived from an aromatic vinyl compound and/or a structural unit derived from other vinyl compound. The amount of the structural unit other than the structural unit derived from a chain conjugated diene compound in the polymer block [B] is usually 30% by mass or less, preferably 20% by mass or less, more preferably 10% by mass or less.

When the amount of the structural unit derived from a chain conjugated diene compound in the polymer block [B] falls within the above range, it is possible to achieve heat resistance and flexibility of the adhesive sheet at the same time.

When the block copolymer [C] comprise a plurality of polymer blocks [B], the polymer blocks [B] may be the same or different.

Examples of aromatic vinyl compounds include styrene; styrenes having a C1-C6 alkyl group as a substituent, such as α-methylstyrene, 2-methylstyrene, 3-methylstyrene, 4-methylstyrene, 2,4-diisopropylstyrene, 2,4-dimethylstyrene, 4-t-butyl styrene, and 5-t-butyl-2-methylstyrene; styrenes having a halogen atom as a substituent, such as 4-chlorostyrene, dichlorostyrene and 4-monofluorostyrene; styrenes having a C1-C6 alkoxy group as a substituent, such as 4-methoxystyrene; and styrenes having an aryl group as a substituent, such as 4-phenylstyrene. These aromatic vinyl compounds may be used singly or in combination of two or more kinds. Preferred from the perspective of lowering moisture absorbency are polar group-free aromatic vinyl compounds, such as styrene and styrenes having a C1-C6 alkyl group as a substituent, with styrene being particularly preferred for its industrial availability.

Examples of chain conjugated diene compounds include 1,3-butadiene, isoprene, 2,3-dimethyl-1,3-butadiene, and 1,3-pentadiene. These chain conjugated diene compounds may be used singly or in combination of two or more kinds. Preferred from the perspective of lowering moisture absorbency are polar group-free chain conjugated diene compounds, with 1,3-butadiene and isoprene being particularly preferred for their industrial availability.

Examples of other vinyl compounds include chain vinyl compounds, cyclic vinyl compounds, unsaturated cyclic acid anhydrides, and unsaturated imide compounds. These vinyl compounds may have substituent(s) such as nitrile group, alkoxycarbonyl group, hydroxycarbonyl group, and halogens. These vinyl compounds may be used singly or in combination of two or more kinds. Preferred from the perspective of lowering moisture absorbency are those having no polar group, such as C2-20 chain olefins such as ethylene, propylene, 1-butene, 1-pentene, 1-hexene, 1-heptene, 1-octene, 1-nonene, 1-decene, 1-dodecene, 1-eicosene, 4-methyl-1-pentene, and 4,6- dimethyl-1-heptene; and C5-C20 cyclic olefins such as vinylcyclohexane, with C2-20 chain olefins being preferred and ethylene and propylene being particularly preferred.

### -Block Copolymer [C]-

The block copolymer [C] is a precursor of the hydrogenated block copolymer [D] and is a polymer which comprises at least two polymer blocks [A] and at least one polymer block [B]. The block copolymer [C] usually comprises three or less polymer blocks [A], preferably two polymer blocks [A]. The block copolymer [C] usually comprises two or less polymer blocks [B], preferably one polymer block [B].

The block of the block copolymer [C] takes any form and may be a chain or radial block. The block copolymer [C] is preferably a chain block copolymer for its good mechanical strength. The most preferred form of the block copolymer [C] is an A-B-A triblock copolymer which comprises the polymer blocks [A] bound to both ends of the polymer block [B].

When the weight fraction of all polymer blocks [A] of the entire block copolymer [C] is defined as wA and the weight fraction of all polymer blocks [B] of the entire block copolymer [C] is defined as wB, the ratio of wA to wB (wA:wB) is preferably from 30:70 to 60:40, more preferably from 40:60 to 58:42, even more preferably from 45:55 to 55:45. If wA is too high, for example, the low temperature impact resistance of a laminate or structure manufactured using the adhesive sheet may decrease. On the other hand, if wA is too low, for example, the support strength or rigidity of a laminate or structure manufactured using the adhesive sheet may be insufficient.

The molecular weight of the block copolymer [C] is usually from 35,000 or more and 200,000 or less, preferably 38,000 or more and 150,000 or less, more preferably 40,000 or more and 100,000 or less, in terms of polystyrene equivalent weight average molecular weight (Mw) measured by gel permeation chromatography (GPC) using tetrahydrofuran (THF) as a solvent. The molecular weight distribution (Mw/Mn) of the block copolymer [C] is preferably 3 or less, more preferably 2 or less, even more preferably 1.5 or less.

When Mw and Mw/Mn fall within the respective ranges above, the adhesive sheet has favorable heat resistance and mechanical strength.

The block copolymer [C] can be produced by any methods known in the art. Exemplary production methods include those described for example in WO2003018656A and WO2011096389A.

### -Hydrogenated Block Copolymer [D]-

The hydrogenated block copolymer [D] may be a polymer obtained by selectively hydrogenating carbon-carbon unsaturated bonds of the main chain and side chain derived from the chain conjugated diene compound of the block copolymer [C]; a polymer obtained by hydrogenating carbon-carbon unsaturated bonds of the main chain and side chain derived from the chain conjugated diene compound and carbon-carbon unsaturated bonds of the aromatic ring derived from the aromatic vinyl compound of the block copolymer [C]; or a mixture of the foregoing.

When selectively hydrogenating carbon-carbon unsaturated bonds of the main chain and side chain derived from the chain conjugated diene compound of the block copolymer [C], the hydrogenation ratio of carbon-carbon unsaturated bonds of the main chain and side chain is usually 95 mol% or more, preferably 97 mol% or more, more preferably 99 mol% or more, and the hydrogenation ratio of carbon-carbon unsaturated bonds of the aromatic ring derived from the aromatic vinyl compound is usually 10 mol% or less, preferably 5 mol% or less, more preferably 3 mol% or less.

The higher the hydrogenation ratio of carbon-carbon unsaturated bonds of the main chain and side chain derived from the chain conjugated diene compound, the more favorable the weather resistance and heat degradation resistance of the adhesive sheet. By reducing hydrogenation of carbon-carbon unsaturated bonds of the aromatic ring derived from the aromatic vinyl compound, degradation of the adhesive sheet can be easily reduced.

When hydrogenating carbon-carbon unsaturated bonds of the main chain and side chain derived from the chain conjugated diene compound and carbon-carbon unsaturated bonds of the aromatic ring derived from the aromatic vinyl compound of the block copolymer [C], the hydrogenation ratio is 90 mol% or more, preferably 95 mol% or more, more preferably 99 mol% or more, of all the carbon-carbon unsaturated bonds.

When the hydrogenation ratio of the hydrogenated block copolymer [D] falls within the range described above, the adhesive sheet has good transparency and heat degradation resistance. Further, such a hydrogenated block copolymer [D] is particularly preferred because the adhesive sheet has better light resistance and higher heat distortion temperature than those obtained using a hydrogenated block copolymer [D] that is obtained by selectively hydrogenating carbon-carbon unsaturated bonds derived from the chain conjugated diene compound.

The hydrogenation ratio of carbon-carbon unsaturated bonds derived from the chain conjugated diene compound and the hydrogenation ratio of carbon-carbon unsaturated bonds derived from the aromatic vinyl compound of the hydrogenated block copolymer [D] can be determined for example by measuring ¹H-NMR spectra of the block copolymer [C] and the hydrogenated block copolymer [D].

Hydrogenation of unsaturated bonds in the block copolymer [C] can be achieved by any methods known in the art and in any reaction scheme.

Examples of methods of selectively hydrogenating carbon-carbon unsaturated bonds of the main chain and side chain derived from the chain conjugated diene compound of the block copolymer [C] include hydrogenation methods known in the art, such as those described in JP201578090A.

Examples of methods of hydrogenating carbon-carbon unsaturated bonds of the main chain and side chain derived from the chain conjugated diene compound and carbon-carbon unsaturated bonds derived from the aromatic ring of the aromatic vinyl compound of the block copolymer [C] include methods described for example in WO2011096389A and WO2012043708A.

After completion of the hydrogenation reaction, the hydrogenated block copolymer [D] can be recovered by removing the hydrogenation catalyst, or the hydrogenation catalyst and polymerization catalyst, from the reaction solution and then removing the solvent from the obtained solution.

The recovered hydrogenated block copolymer [D] can be usually pelletized for a subsequent reaction for introducing an alkoxysilyl group and subsequent sheet molding.

The molecular weight of the hydrogenated block copolymer [D] is usually 35,000 or more and 200,000 or less, preferably 38,000 or more and 150,000 or less, more preferably 40,000 or more and 100,000 or less, in terms of polystyrene equivalent weight average molecular weight (Mw) measured by GPC using THF as a solvent. The molecular weight distribution (Mw/Mn) of the hydrogenated block copolymer [D] is preferably 3 or less, more preferably 2 or less, particularly preferably 1.5 or less.

When Mw and Mw/Mn fall within the respective ranges above, the adhesive sheet has favorable heat resistance and mechanical strength.

### -Modified Hydrogenated Block Copolymer [E]-

The modified hydrogenated block copolymer [E] is a polymer obtained by introducing an alkoxysilyl group into the hydrogenated bock copolymer [D] by reaction with an ethylenically unsaturated silane compound in the presence of an organic peroxide.

Introduction of an alkoxysilyl group into the hydrogenated block copolymer [D] provides the modified hydrogenated block copolymer [E] with strong adhesion to glass or metal.

The molecular weight of the modified hydrogenated block copolymer [E] is substantially the same as the molecular weight of the source hydrogenated block copolymer [D] because the amount of an alkoxysilyl group introduced is small. On the other hand, because the hydrogenated bock copolymer [D] is reacted with an ethylenically unsaturated silane compound in the presence of an organic peroxide, the crosslinking reaction and the cleavage reaction of the polymer occur simultaneously, so that the value of the molecular weight distribution of the modified hydrogenated block copolymer [E] may become larger than that of the hydrogenated block copolymer [D].

The molecular weight of the modified hydrogenated block copolymer [E] is usually 40,000 or more and 200,000 or less, preferably 45,000 or more and 150,000 or less, more preferably 50,000 or more and 100,000 or less, in terms of polystyrene equivalent weight average molecular weight (Mw) measured by GPC using THF as a solvent. The molecular weight distribution (Mw/Mn) of the modified hydrogenated block copolymer [E] is preferably 3.5 or less, more preferably 2.5 or less, particularly preferably 2.0 or less.

When Mw and Mw/Mn fall within the respective ranges above, the adhesive sheet has favorable heat resistance and mechanical strength.

As the modified hydrogenated block copolymer [E], for example, those disclosed in PTLS 4 and 5 can be used. As the modified hydrogenated block copolymer [J], for example, modified hydrogenated block copolymers obtained by introducing an alkoxysilyl group into the hydrogenated block copolymers disclosed in WO2013047690A and JP2014208799A can be used.

### [Adhesive]

The adhesive constituting the adhesive sheet obtained by the production method of the present disclosure contains the thermoplastic resin as a main component and shows good adhesion to inorganic materials such as glass and metal. The adhesive constituting the adhesive sheet can optionally comprise additives.

### <Thermoplastic Resin>

The amount of the thermoplastic resin in the adhesive is usually 65% by weight or more, preferably 70% by weight or more, more preferably 75% by weight or more. When the adhesive contains at least 65% by weight of the thermoplastic resin, the resulting adhesive sheet has good mechanical strength and heat resistance, as well as better adhesion to inorganic materials such as glass and metal.

### <Additive>

In addition to the thermoplastic resin described above contained as a main component, the adhesive can contain various additives which are generally blended into resins. Examples of additives include tackifiers for reducing adhesion temperature and for adjusting adhesion to glass and metal; anti-blocking agents for improving processing characteristics; ultraviolet absorbers for blocking ultraviolet rays; and antioxidants and light stabilizers for improving durability.

### «Tackifier»

Tackifiers can be blended in the thermoplastic resin to adjust the bonding temperature and tackiness of the adhesive to fall within respective preferred ranges. Preferred tackifiers are those capable of being uniformly dissolved or dispersed in the thermoplastic resin, with hydrocarbon polymers having a number average molecular weight of 300 or more and 5,000 or less being more preferred.

Specific examples of hydrocarbon polymers which can be used as tackifiers include low molecular weight forms of polyisobutylene, poly-1-butene, poly-4-methylpentene, poly-1-octene, ethylene/α-olefin copolymers, and hydrogenated forms thereof; and low molecular weight forms of polyisoprene and polyisoprene-butadiene copolymers, and hydrogenated forms thereof.

These tackifiers can be used singly or in combination of two or more kinds.

Preferred tackifiers are hydrogenated low molecular weight forms of polyisobutylene or hydrogenated low molecular weight forms of polyisoprene because they are especially excellent in transparency, ligthfastness and tackiness.

When the adhesive contains a tackifier, the amount of the tackifier is usually 30 parts by weight or less, preferably 25 parts by weight or less, more preferably 20 parts by weight or less, per 100 parts by weight of the thermoplastic resin. When the tackifier content is too high, there is concern that the resulting adhesive sheet becomes susceptible to heat resistance reduction or blocking.

### «Antioxidant and Light Stabilizer»

Examples of antioxidants and light stabilizers for improving the durability of adhesives used in the present disclosure include phosphorus-based antioxidants, phenol-based antioxidants, sulfur-based antioxidants, and hindered amine-based light stabilizers. Any antioxidants and light stabilizers known in the art can be used.

The antioxidants and light stabilizers can be used singly or in combination of two or more kinds.

When the adhesive contains at least one of the antioxidant and light stabilizer, the total amount of the antioxidant and light stabilizer is usually 5 parts by weight or less, preferably 3 parts by weight or less, more preferably 1.5 parts by weight or less, per 100 parts by weight of the thermoplastic resin.

### «Anti-Blocking Agent and Ultraviolet Absorber»

Anti-blocking agents and ultraviolet absorbers known in the art can be used. The anti-blocking agents and ultraviolet absorbers can be used singly or in combination of two or more kinds.

### «Method of Blending Additives»

Any method can be used to blend additives into the thermoplastic resin. Blending can be achieved using any methods commonly used in the art for producing resin compositions. For example, an adhesive which comprises as a main component a thermoplastic resin blended with an additive can be produced by homogeneously mixing a thermoplastic resin pellet and an additive, melt-kneading the mixture with a continuous melt kneader such as a twin-screw extruder, and extruding the kneaded mass into a pellet.

Alternatively, the additive may be homogeneously mixed with a pellet of the thermoplastic resin used in the production method of the present disclosure and subjected to a production process of an adhesive sheet, which is described later.

### [Adhesive Sheet]

The adhesive sheet produced by the production method of the present disclosure has an embossed shape on both sides. Because the adhesive sheet is embossed on both sides, blocking does not easy occur, and even when a surface of the adhesive sheet contacted with, for example, a smooth glass surface or when two or more such adhesive sheets contacted with each other, sticking does not occur at the contact surface. Thus, the adhesive sheet offers good handleability and operability.

### <Properties>

The embossed shape to be formed on the surface of the adhesive sheet is not particularly limited in depth, height, pitch, regularity, linear shape, dot shape and other properties; any shape can be employed so long as the effect described above is not compromised.

The thickness of the adhesive sheet is usually 10 µm or more and 1,000 µm or less, preferably 20 µm or more and 900 µm or less, more preferably 25 µm or more and 800 µm or less.

If the adhesive sheet is too thin, blocking may occur when the adhesive sheet is stored in roll form for a long period of time. If the adhesive sheet is too thick, the adhesive sheet is too rigid to be easily wound in roll form. Further, if the adhesive sheet is too thick, the adhesive sheet cannot be easily cut, which may hinder sheet manufacture. In this case, it may also become difficult to manufacture a laminate by bonding curved glass plates with the adhesive sheet.

The adhesive sheet produced by the production method of the present disclosure shows low thermal shrinkage at temperatures during the manufacture of a laminate.

The low thermal shrinkage of the adhesive sheet can be confirmed based on the fact that it shows shrinkage of 5% or less in the MD and TD directions as measured for example in accordance with JIS K 7133 described in Examples.

### <Laminate including Adhesive Sheet>

The adhesive sheet produced by the production method of the present disclosure can be laminated onto an inorganic material sheet such as glass or metal sheet, heated, and pressurized to provide a laminate in which they are bonded together as one piece.

In this case, a plurality of such adhesive sheets can be used to provide a more multilayered laminate.

### <Details of Production Method>

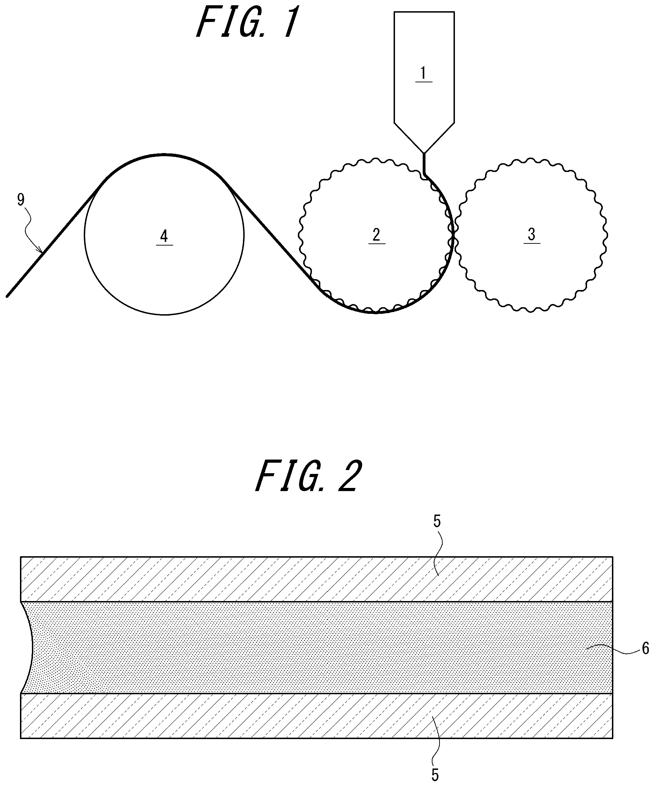

The method of the present disclosure for producing an adhesive sheet may use: a metallic cast roll and a rubber nip roll (hereinafter "Embodiment <1>"); or a rubber cast roll and a metallic nip roll (hereinafter "Embodiment <2>"), with Embodiment <1> being preferred. An example of the production method of the present disclosure based on Embodiment <1> will now be described in detail with reference to FIG. 1.

FIG. 1 is a schematic view of a production method of the present disclosure using a T-die type film melt extrusion molding machine. In FIG. 1, reference numeral 1 denotes a T die connected to an extruder or the like; reference numeral 2 a metallic roll having an embossed shape on the surface; reference numeral 3 a rubber nip roll having an embossed shape on the surface; reference numeral 4 a transfer or cooling roll; and reference numeral 9 a molded adhesive sheet which comprises a thermoplastic resin as a main component.

One side of a melt which comprises a thermoplastic rein as a main component and extruded from the T-die 1 is contacted with a surface of the cast roll 2 while nipping the melt from the opposite side with the nip roll 3 to thereby produce a sheet having an embossed shape on both sides. FIG. 1 illustrates an embodiment wherein a melt is nipped after contacted with the surface of the cast roll 2. The present disclosure also contemplates methods wherein the melt is nipped at the same time as being contacted with the surface of the cast roll 2, and methods wherein the melt is nipped after contacted with the surface of the nip roll 3.

Where necessary, the resulting adhesive sheet is wound by a winder after passing through the transfer or cooling roll 4.

The following describes a cast roll and a nip roll for use in Embodiment <1> described above in which a metallic cast roll and a rubber nip roll are used. Of note, preferred materials of the rubber cast roll and the metallic nip roll used in Embodiment <2> are the same as those of the rubber nip roll and the metallic cast roll used in Embodiment <1>.

### «Cast Roll 2»

The cast roll 2 may be made of any material, but the cast roll 2 is preferably a metallic roll of high rigidity. The cast roll 2 is preferably a roll having a structure that allows temperature controllable heating or cooling media to flow through inside.

The cast roll 2 may be of any size as long as it is large enough to cool and solidify a film of adhesive melt which has been melt-extruded from the T-die. The cast roll 2 is usually about 100 mm or more and about 1 m or less in diameter. Surface treatment such as hard chromium plating, nickel plating, amorphous chromium plating or ceramic spraying may be applied to the surface of the roll.

The cast roll 2 has an embossed shape formed on the surface. The embossed shape is not particularly limited in depth, height, pitch, regularity, linear shape, dot shape and other properties so long as blocking between adhesive sheets produced by the method of the present disclosure and sticking of the adhesive sheet to smooth glass surfaces can be prevented.

Methods known in the art can be used to form such an embossed shape on the surface of the cast roll 2 so long as the effect of the present disclosure is not compromised. Specific methods include blasting, mill engraving using a mother mill, laser engraving, and etching.

### <<Nip Roll 3>>

The surface of the nip roll 3 is preferably made of material having a lower hardness than that of the metallic cast roll 2. Specifically, it is preferred that at least the surface of the nip roll 3 is made of rubber material having a Shore A hardness of 45 or more and 70 or less. It is preferred that the core of the nip roll (3) is made of metal and has a structure that allows temperature controllable heating and cooling media to flow inside. The rubber layer having an embossed shape on its surface can be of any thickness so long as temperature control by the media is possible.

If the hardness (Shore A hardness) of the rubber used for the surface is too high, the thermal shrinkage of the produced adhesive sheet may become high. If the hardness (Shore A hardness) of the rubber used for the surface is too low, there is a possibility that the surface of the rubber nip roll 3 is deformed at the time of nipping, which may result in failure to provide the resulting adhesive sheet surface with a desired embossed shape. Usually, the nip roll 3 is about 100 mm or more and about 1 m or less in diameter.

Shore A hardness can be measured in accordance with JIS K 6253.

The nip roll 3 has an embossed shape formed on the surface. The embossed shape of the nip roll 3 is not particularly limited in depth, height, pitch, regularity, linear shape, dot shape and other properties; any shape can be employed so long as the effect of the present disclosure is not compromised.

Methods known in the art can be used to form an embossed shape on the surface of the nip roll 3 so long as the effect of the present disclosure is not compromised. Specific methods include blasting, mill engraving using a mother mill, laser engraving, and etching.

### «Examples of Embossed Shape»

The adhesive sheet produced using the cast roll 2 and nip roll 3 having an embossed shape can have any embossed shape on the surface so long as the effect of the present disclosure is not compromised. Examples of embossed shapes include matt finish, continuous groove, square pyramidal recess, and quadrangular pyramidal protrusion disclosed in JPH06198809A, WO1995019885A, JPH0940444A, JPH09241045A, JPH09295839A, JPH10017338A, JPH10167773A, JPH10231150A, JPH11035347A, JPH11147735A, JP2000007390A, JP2000044295A, JP2000203902A, JP2000203900A, JP2000203901A, JP2000256043A, JP2000290046A, JP2000319045A, JP2001019499A, JP2001026468A, JP2001048599A, JP2001114538A, JP2001130931A, JP2001150540A, JP2001163641A, JP2001192244A, JP2001261385A, JP2001220182A, WO2001072509A, JP2002037648A, JP2002104846A, JP2003128442A, JP2003048762A, JP2003212614A, JP2003238218A, WO2014021459A, WO2015016361A, WO2015016358A and WO2015016366A, and any combinations of the foregoing.

### «Production Conditions»

In the method of the present disclosure for producing an adhesive sheet, when the thermoplastic resin to be used is an amorphous resin, the temperature of the cast roll 2 and the nip roll 3 at the time of nipping is preferably adjusted to fall within a range of ([a]-100)°C or above and [a]°C or below, where [a] is the glass transition temperature (Tg) of the adhesive which comprises the thermoplastic resin as a main component (highest glass transition temperature when the adhesive has more than one glass transition temperature).

When the thermoplastic resin to be used is a crystalline resin, the temperature of the cast roll 2 and the nip roll 3 at the time of nipping is preferably adjusted to fall within a range of ([b]-100)°C or above and ([b]-30)°C or below, where [b] is the melting point (Tm) of the adhesive which comprises the thermoplastic resin as a main component. However, when the temperature of the nip roll 3 is higher than the temperature of the cast roll 2, the adhesive sheet easily sticks to the nip roll 3, so that the temperature of the nip roll 3 is preferably equal to or lower than the temperature of the cast roll 2.

If the temperature of the cast roll 2 and/or the nip roll is too low, it may result not only in failure to provide the adhesive sheet surface with a suitable embossed shape, but also in higher thermal shrinkage of the resulting adhesive sheet. On the other hand, if the temperature of the cast roll 2 and/or the nip roll 3 is too high, the adhesive sheet may be wound around the cast roll 2 and/or the nip roll 3 without being separated from the cast roll 2 and/or the nip roll 3, making the adhesive sheet production difficult.

The force for nipping a melt of the adhesive which comprises the thermoplastic resin as a main component by means of the cast roll 2 and nip roll 3 can be adjusted as appropriate in accordance with the state of transfer of the embossed shape on the adhesive sheet being molded.

The linear speed of the melt of the adhesive which comprises the thermoplastic resin as a main component, extruded from the T-die 1, is usually 1 m/min or more and 100 m/min or less, preferably 2 m/min or more and 70 m/min or less, more preferably 3 m/min or more and 50 m/min or less. If the linear speed is less than 1 m/min, the productivity of the adhesive sheet may be lowered, and if the linear speed is greater than 100 m/min, transfer of the embossed shape may become poor.

According to the method of the present disclosure for producing an adhesive layer described above, it is possible to produce a double side embossed adhesive sheet which shows small thermal shrinkage at temperatures used for example in a production process of a laminate such as laminated glass.

A laminate manufactured using the adhesive sheet obtained by the production method of the present disclosure has good dimensional stability of the adhesive layer.

Further, an adhesive sheet roll obtained by winding an adhesive sheet produced by the production method of the present disclosure is less susceptible to blocking even after a prolonged period of time and therefore has good storage stability, making the adhesive sheet suitable to roll-to-roll manufacture of a laminate.

### <Application of Adhesive Sheet>

Manufacture of, for example, laminated glass by the use of an adhesive sheet produced by the production method of the present disclosure can be achieved by a process such as that described below. Specifically, a laminate with a layer structure of, for example, glass plate/adhesive sheet/glass plate is placed into a heat resistant rubber bag or other container. After degassing the inside air, the laminate is heated and pressurized to thereby bond together the glass plates and the adhesive sheet. The heating temperature is usually 100°C or higher and 200°C or lower, preferably 110°C or higher and 190°C or lower, more preferably 120°C or higher and 180°C or lower. The pressure to be applied is usually 0.1 MPa or more and 10 MPa or less, preferably 0.2 MPa or more and 5 MPa or less, more preferably 0.3 MPa or more and 1 MPa or less. The heating and pressurizing time is usually 1 minute or more and 90 minutes or less, preferably 3 minutes or more and 60 minutes or less, more preferably 5 minutes or more and 30 minutes or less. When the temperature, pressure and time fall within the respective ranges described above, favorable adhesion can be established between the adhesive sheet and the glass plate.

When laminated glass is manufactured using this adhesive sheet, air bubbles or unfilled space do no easily occur at the edge of the laminated glass. Further, when this adhesive sheet is used, warping does not easily occur at the edge surface even when thin glass plates are bonded together. Thus, the adhesive sheet is also suitable for the manufacture of lightweight laminated glass formed of thin glass plates bonded together with a thick adhesive sheet.

The adhesive sheet produced by the production method of the present disclosure is suitably used in such applications that involve the production of adhesives for thin glass films; solar cell sealing materials; sealing materials of functional electronics devices such as liquid crystal display elements, photochromic elements, thermochromic elements and electrochromic elements; penetration resistant window materials and bulletproof glass in which a plurality of members including a glass plate, an adhesive sheet and a resin sheet are laminated; and so forth.

### EXAMPLES

The present disclosure will be described in more detail below with reference to Examples, which however shall not be construed as limiting the scope of the present disclosure. It should be noted that "part(s)" and "%" are on a weight basis unless otherwise specified.

Evaluations in Examples are made by the methods described below.

### (1) Weight Average Molecular Weight (Mw) and Molecular Weight Distribution (Mw/Mn)

The molecular weights of the block copolymer [C] and the hydrogenated block copolymer [D] were measured at 40°C in terms of standard polystyrene equivalent values as measured by gel permeation chromatography (GPC) using tetrahydrofuran (THF) as an eluent. As a measurement device, HLC 8320 GPC (Tosoh Corporation) was used.

### (2) Hydrogenation Ratio

The hydrogenation ratio (mol%) of the main chain, side chain and aromatic ring of the hydrogenated block copolymer [D] were determined by measuring ¹H-NMR spectra of the hydrogenated block copolymer [D] and the precursor block copolymer [C].

### (3) Measurement of Glass Transition Temperature (Tg)

A test piece with dimensions of 50 mm in length, 10 mm in width and 1 mm in thickness was prepared by press molding of the hydrogenated block copolymer [D] or the modified hydrogenated block copolymer [E], which is an amorphous thermoplastic resin. Using a viscoelastometer (ARES, TA Instruments Japan, Inc.), the test piece was measured for dynamic viscoelastic characteristics at a heating rate of 5°C/min in a temperature range of -100°C to +150°C in accordance with the method of JIS-K 7244-4. By reading the peak top temperature of loss tangent (tan δ) on the higher temperature side, the glass transition temperature (°C) Tg₂ derived from hard segments was determined.

### (4) Measurement of Melting Point (Tm)

The melting point Tm of a crystalline thermoplastic resin was measured as a melting start temperature in accordance with the method of JIS K 7121 using a differential scanning calorimeter (DSC 6220S11, Nanotechnology Co., Ltd.) in a temperature range of 25°C to 200°C at a heating rate of 10°C/min.

### (5) Evaluation of Thermal Shrinkage

From an adhesive sheet [K] produced by extrusion molding, a square test piece of 120 mm each side was cut out such that opposing sides are parallel to the extrusion direction. In accordance with JIS K 7133, the test piece was placed on a kaolin bed in an oven and measured for dimensions in a direction parallel to extrusion direction (MD direction) and in a direction perpendicular to extrusion direction (TD direction) before and after 5 min retention at 135°C on the kaolin bed. Based the measurements, %thermal shrinkage was calculated. Evaluations were made based on the following criteria: When thermal shrinkage was 5% or less both in the MD and TD directions, the test piece was evaluated as being good (rank A) with sufficiently low thermal shrinkage. When the thermal shrinkage exceeded 5% even in one of the MD and TD directions, the test piece was evaluated as being bad (rank B) with high thermal shrinkage.

### (6) Manufacture of Laminate [M], Evaluations of Surface Distortion and shrinkage Cavity at Edge Surface

### (Manufacture of Laminate [M])

Four adhesive sheets [K] cut into squares of 300 mm each side were sandwiched between two square sheets of float glass with dimensions of 300 mm each side and 1.1 mm in thickness. In this way a laminate was obtained.

This laminate was placed in a 75 µm thick resin bag having a layer structure of NY (nylon) / adhesive layer / PP (polypropylene). The opening of the bag was partially heat-sealed with a heat sealer while leaving a 200 mm wide opening at the center, and using a vacuum packing machine (BH-951, Panasonic Corporation) the opening was completely heat-sealed while degassing the inside air to hermetically package the laminate in the bag.

Thereafter, the hermetically sealed laminate was placed in an autoclave and pressurized and heated at a pressure of 0.8 MPa and a temperature of 135° C for 60 minutes to manufacture a laminate [M] having a layer configuration such as that illustrated in FIG. 2 (glass / adhesive layer / glass). In FIG. 2, reference numeral 5 denotes a float glass layer and reference numeral 6 denotes an adhesive layer.

### (Evaluation of Surface Distortion of Laminate [M])

The degree of surface distortion was confirmed by visually observing a reflection image on the outermost surface of the laminate [M] and evaluating the state of distortion of the reflection image. A sheet on which parallel lines are drawn in a grid pattern at intervals of 5 cm was placed on a wall surface separated from the laminate by a distance of 1.25 m, and a reflection image of the parallel lines projected on the outermost surface of the laminate [M] was visually observed to evaluate the degree of surface distortion. Specifically, when no distortion was observed for the parallel lines, the laminate was evaluated as being good (rank A) with sufficiently small surface distortion, and when distortion was observed, the laminate was evaluated as being bad (rank B).

### (Evaluation of Shrinkage Cavity at Edge Surface of Laminate [M])

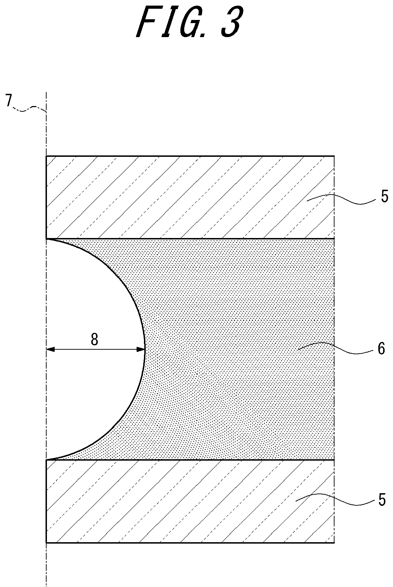

The degree of shrinkage cavity at the edge surface of the laminate [M] was confirmed. FIG. 3 is an enlarged schematic view showing an edge surface portion of the laminate [M]. Reference numerals 3, 5 and 6 in FIG. 3 are as defined above. Reference numeral 7 denotes a reference line that runs along the glass plates at the edge of the laminate and reference numeral 8 denotes the shortest distance between the bottom of the shrinkage cavity formed at the edge of the adhesive sheet and the reference line.

When the shortest distance between the bottom of the shrinkage cavity at the edge of adhesive sheet and the reference line 7 was less than 0.6 mm, the laminate was evaluated as being good (rank A) with a sufficiently small shrinkage cavity, and when the distance was 0.6 mm or more, the laminate was evaluated as being bad (rank B) with a large shrinkage cavity.

### (7) Evaluation of Reworkability

One sheet of adhesive sheet [K] cut into a square of 300 mm each side was sandwiched between two square sheets of float glass with dimensions of 300 mm each side and 1.1 mm in thickness. In this way a laminate was obtained.

This laminate was placed in a 75 µm thick resin bag having a layer structure of NY / adhesive layer / PP. The opening of the bag was partially heat-sealed with a heat sealer while leaving a 200 mm wide opening at the center, and using the vacuum packing machine the opening was completely heat-sealed while degassing the inside air to hermetically package the laminate in the bag.

The hermetically sealed laminate was allowed to stand for one day at normal temperature (25°C) and taken out from the bag. It was confirmed whether the glass plate and the adhesive sheet can be separated from each other when trying to displace them in a direction perpendicular to the lamination direction of the laminate.

When separation easily occurred without resistance, the adhesive sheet was evaluated as being good (rank A) in reworkability, and when separation failed with resistance, the adhesive sheet was evaluated as being bad (rank B) in reworkability.

### (8) Evaluation of Blocking Resistance

A roll [R] obtained by winding 100 m of the adhesive sheet [K] around a 3 inch polypropylene (PP) core was stored in an environment of 40°C for 2 months. When the adhesive sheet was successfully unrolled using a sheet feeder until the winding core is exposed, the sheet was evaluated as being good (rank A) in blocking resistance. When unrolling was failed during unrolling due to sticking of portions of the sheet or when deformation such as sheet elongation occurred due to high resistance to unroll, the adhesive sheet was evaluated as being bad (rank B) in blocking resistance.

### [Production Example 1] Production of Modified Hydrogenated Block Copolymer [E1]

### (Production of Hydrogenated Block Copolymer [D1])

300 parts of dehydrated cyclohexane, 10 parts of dehydrated styrene as an aromatic vinyl compound and 1.1 parts of dibutyl ether were placed in a reactor equipped with a stirrer and sufficiently purged with nitrogen. 0.75 parts of n-butyllithium (15% in cyclohexane) was added while stirring the whole mass at 60°C to initiate polymerization. Subsequently, 15 parts of dehydrated styrene as an aromatic vinyl compound was continuously added in the reactor over 40 minutes while stirring the whole mass at 60°C to proceed the polymerization reaction. After completion of the addition, the whole mass was stirred at 60°C for another 20 minutes. The polymerization conversion rate at this point was 99.5% as measured by gas chromatography (GC) of the reaction solution.

Next, 50 parts of dehydrated isoprene as a chain conjugated diene compound was continuously added to the reaction solution over 130 minutes, and after completion of addition, stirring was continued for another 30 minutes. At this point, the reaction solution was analyzed by GC and the polymerization conversion rate was found to be 99.5%.

25 parts of dehydrated styrene as an aromatic vinyl compound was then continuously added to the reaction solution over 70 minutes, and after completion of the addition, the mixture was stirred for another 60 minutes. At this point, the reaction solution was analyzed by GC and the polymerization conversion rate was found to be almost 100%.

To the reaction was added 1.0 part of isopropyl alcohol to quench the reaction to afford a polymer solution. The block copolymer [C1] contained in the polymer solution was an A-B-A triblock copolymer having a weight average molecular weight (Mw) of 56,700 and a molecular weight distribution (Mw/Mn) of 1.03, with wA:wB (styrene derived repeating unit : isoprene derived repeating unit) being 50:50 (weight basis).

Next, the polymer solution was transferred to a pressure-resistant reactor equipped with a stirrer, and 4.0 parts of nickel catalyst supported on kieselguhr (E22U, 60% nickel loading, JGC Catalysts and Chemicals Ltd.) and 100 parts of dehydrated cyclohexane were added and mixed. The reactor was purged with hydrogen gas, and a hydrogenation reaction was performed at 190°C and at a pressure of 4.5 MPa for 6 hours by further supplying hydrogen gas while stirring the solution.

The hydrogenated block copolymer [D1] contained in the reaction solution obtained by the hydrogenation reaction had a weight average molecular weight (Mw) of 60,100 and a molecular weight distribution (Mw/Mn) of 1.04.

After completion of the hydrogenation reaction, the reaction solution was filtered to remove the hydrogenation catalyst. To the resulting solution was added 2.0 parts of xylene solution in which 0.1 parts of a phenol-based antioxidant pentaerythritol tetrakis[3-(3,5-di-t-butyl-4-hydroxyphenyl)propionate] (AO-60, ADEKA CORPORATION) is dissolved.

Subsequently, the solution after the addition of the xylene solution was placed in a condition of a temperature of 260°C and a pressure of 0.001 MPa or less using a cylindrical condenser/dryer (Kontro, Hitachi, Ltd.) to remove cyclohexane, xylene and other volatile components from the solution. The obtained molten polymer was extruded from a die in strands, cooled, and cut with a pelletizer to afford 94 parts of a pellet of the hydrogenated block copolymer [D1].

The pelletized hydrogenated block copolymer [D1] had a weight average molecular weight (Mw) of 59,500, a molecular weight distribution (Mw/Mn) of 1.06, a hydrogenation ratio of almost 100 mol%, and Tg₂ of 131°C.

### (Production of Modified Hydrogenated Block Copolymer [E1])

To 100 parts of the pelletized hydrogenated block copolymer [D1] were added 2.0 parts of vinyltrimethoxysilane as an ethylenically unsaturated silane compound and 0.2 parts of 2,5-dimethyl-2,5-di(t-butylperoxy)hexane (PERHEXA® 25B (PERHEXA is a registered trademark in Japan, foreign countries, or both), NOF CORPORATION) as an organic peroxide. This mixture was kneaded using a twin-screw extruder (TEM-37B, Toshiba Machine Co., Ltd.) at a resin temperature of 200°C for a residence time of 60 to 70 seconds. The obtained kneaded mass was extruded in strands, air-cooled, and cut with a pelletizer to afford 97 parts of a pellet [P1] of the modified hydrogenated block copolymer [E1] having an alkoxysilyl group.

After dissolving 10 parts of the pellet [P1] in 100 parts of cyclohexane, the obtained solution was poured into 400 parts of dehydrated methanol to coagulate the modified hydrogenated block copolymer [E1], and the coagulated mass was collected by filtration. The filtrate was dried under vacuum at 25°C to isolate 9.0 parts of a crumb of the modified hydrogenated block copolymer [E1].

Measurement of an FT-IR spectrum of the modified hydrogenated block copolymer [E1] revealed the presence of a new absorption band derived from Si-OCH₃ group at 1,090 cm⁻¹ and new absorption bands derived from Si-CH₂ group at 825 cm⁻¹ and 739 cm⁻¹, which are different from the positions of the absorption bands derived from Si-OCH₃ group and Si-CH group of vinyltrimethoxysilane (1,075 cm⁻¹ for Si-OCH₃ group, and 808 cm⁻¹ and 766 cm⁻¹ for Si-CH group).

A ¹H-NMR spectrum in deuterochloroform of the modified hydrogenated block copolymer [E1] was measured, and a peak based on the proton of the methoxy group was observed at 3.6 ppm. From the peak area ratio, it was confirmed that 1.9 parts of vinyltrimethoxysilane was bound to 100 parts of the hydrogenated block copolymer [D1]. The Tg₂ of the modified hydrogenated block copolymer [E1] was 126°C.

### [Production Example 2] Production of Modified Hydrogenated Block Copolymer [E2]

A pellet of a hydrogenated block copolymer [D2] was obtained by performing polymerization, hydrogenation, condensation to dryness, extrusion, cooling and pelletizing as in Production Example 1 except that 20 parts of dehydrated styrene as an aromatic vinyl compound, 60 parts of dehydrated isoprene as a chain conjugated diene compound, and 20 parts of dehydrated styrene as an aromatic vinyl compound were added in the order presented, and that the amount of n-butyllithium (15% in cyclohexane) used was changed to 0.69 parts.

Introduction of an alkoxysilyl group into the hydrogenated block copolymer [D2] was carried out as in Production Example 1 to afford 97 parts of a pellet [P2] made of a modified hydrogenated block copolymer [E2]. As in Production Example 1, it was confirmed from the peak area ratio that 1.9 parts of vinyltrimethoxysilane was bound to 100 parts of the hydrogenated block copolymer [D2].

The block copolymer [C2] before hydrogenation was an A-B-A triblock copolymer with wA:wB (styrene derived repeating unit : isoprene derived repeating unit) of 40:60 (weight basis).

The pelletized hydrogenated block copolymer [D2] had a weight average molecular weight (Mw) of 61,000, a molecular weight distribution (Mw/Mn) of 1.06, a hydrogenation ratio of almost 100 mol%, and Tg₂ of 125°C.

### [Production Example 3] Production of Modified Ethylene/Octene Copolymer

To 100 parts of an ethylene/octene copolymer (melting point: 99°C; ENGAGE 8480, Dow Chemical Company) were added 2.0 parts of vinyltrimethoxysilane as an ethylenically unsaturated silane compound and 0.2 parts of 2,5-dimethyl-2,5-di(t-butylperoxy)hexane (PERHEXA® 25B, NOF CORPORATION) as an organic peroxide. The resulting mixture was kneaded using a twin-screw extruder (TEM-37B, Toshiba Machine Co., Ltd.) at a resin temperature of 200°C for a residence time of 60 to 70 seconds. The obtained kneaded mass was extruded in strands, air-cooled, and cut with a pelletizer to afford 97 parts of a pellet [P3] of a modified ethylene/octene copolymer having an alkoxysilyl group.

A ¹H-NMR spectrum in o-dichlorobenzene-d4 of the modified ethylene/octene copolymer was measured, and a peak based on the proton of the methoxy group was observed at 3.6 ppm. From the peak area ratio, it was confirmed that 1.9 parts of vinyltrimethoxysilane was bound to 100 parts of the ethylene/octene copolymer. The modified ethylene/octene copolymer had a melting point of 95°C.

### [Production Example 4] Production of Modified Hydrogenated Block Copolymer [E3]

A pellet of a hydrogenated block copolymer [D3] was obtained by performing polymerization, hydrogenation, condensation to dryness, extrusion, cooling and pelletizing as in Production Example 1 except that the amount of n-butyllithium (15% in cyclohexane) used was changed to 0.88 parts.

Introduction of an alkoxysilyl group into the hydrogenated block copolymer [D3] was carried out as in Production Example 1 to afford 98 parts of a pellet [P4] made of a modified hydrogenated block copolymer [E3]. As in Production Example 1, it was confirmed from the peak area ratio that 1.8 parts of vinyltrimethoxysilane was bound to 100 parts of the hydrogenated block copolymer [D3].

The block copolymer [C3] before hydrogenation was an A-B-A triblock copolymer with wA:wB (styrene derived repeating unit : isoprene derived repeating unit) of 50:50 (weight basis).

The pelletized hydrogenated block copolymer [D3] had a weight average molecular weight (Mw) of 49,500, a molecular weight distribution (Mw/Mn) of 1.03, a hydrogenation ratio of almost 100 mol%, and Tg₂ of 126°C.

The Tg₂ of the modified hydrogenated block copolymer [E3] was 121°C.

### [Example 1] Production of Adhesive Sheet [K1] Using Modified Hydrogenated Block Copolymer [E1]

Using a T-die type film melt extrusion molding machine (model: GT-40, Research Laboratory of Plastics Technology Co., Ltd.) having an extruder equipped with a full flight screw of 40 mm diameter and a T-die (GSI Creos Corporation) of 600 mm width, the pellet [P1] obtained in Production Example 1 was extruded from the T-die at a cylinder temperature of 230°C and at a T-die temperature of 230°C. A melt of the extruded pellet [P1] was nipped using a metallic cast roll (set temperature: 80°C) having a matt finish embossed shape on the surface and a rubber nip roll (set temperature: 80°C) having a Shore A hardness of 60 and a similar matt finish embossed shape on the surface, and cooled on a cooling roll (temperature: 60°C) to produce an adhesive sheet [K1] having a thickness of 0.8 mm. The thickness of the adhesive sheet [K1] was measured on a contact type thickness meter (Digimatic indicator code No. 543-575, Mitutoyo Precision Equipment Co., Ltd.).

The resulting adhesive sheet [K1] had a matt finish embossed shape transferred on both sides.

The adhesive sheet [K1] was sized to a width of 460 mm by cutting out the longitudinal edges and wound 100 m around a 3 inch polypropylene core to produce a roll [R1].

### (Evaluations of Adhesive Sheet [K1])

Thermal shrinkage of the adhesive sheet [K1] was good (rank A) with thermal shrinkage of not greater than 5% both in the MD and TD directions.

Surface distortion of a laminate [M1] formed using the adhesive sheet [K1] was good (rank A) with sufficiently small surface distortion. Further, the shrinkage cavity at the edge surface was less than 0.6 mm in depth and evaluated as being good (rank A).

The reworkability of the adhesive sheet [K1] was good (rank A) because the adhesive sheet [K1] and the glass plate could be easily separated from each other.

The blocking resistance of the roll [R1] of the adhesive sheet [K1] was good (rank A) because the adhesive sheet [K1] could be unrolled until the winding core was exposed.

Results of these evaluations are summarized in Table 1.

### [Example 2] Production of Adhesive Sheet [K2] Using Modified Hydrogenated Block Copolymer [E2]

An adhesive sheet [K2] having a thickness of 0.8 mm was prepared under the same conditions as in Example 1 except that the pellet [P2] obtained in Production Example 2 was used in place of the pellet [P1] obtained in Production Example 1. The adhesive sheet [K2] had an embossed shape on both sides. The obtained sheet [K2] was wound 100 m on a 3 inch core in the same manner as in Example 1 to prepare a roll [R2] and stored.

### (Evaluation of Adhesive Sheet [K2])

Thermal shrinkage, surface distortion and shrinkage cavity at the edge surface of a laminate [M2], reworkability, and blocking resistance of the roll [R2] were evaluated using the adhesive sheet [K2] in the same manner as in Example 1. The evaluation results are shown in Table 1.

### [Example 3] Production of Adhesive Sheet [K3] Using Modified Ethylene/Octene Copolymer

An adhesive sheet [K3] having a thickness of 0.8 mm was prepared under the same conditions as in Example 1 except that the pellet [P3] obtained in Production Example 3 was used in place of the pellet [P1] obtained in Production Example 1 and that the cylinder temperature of the extruder was set to 140°C, the temperature of the T-die to 140°C, the temperature of the cast roll to 70°C, the temperature of the nip roll to 70°C, and the temperature of the cooling roll to 50°C. The adhesive sheet [K3] had an embossed shape on both sides. The obtained sheet [K3] was wound 100 m on a 3 inch core in the same manner as in Example 1 to prepare a roll [R3] and stored.

### (Evaluation of Adhesive Sheet [K3])

Thermal shrinkage, surface distortion and shrinkage cavity at the edge surface of a laminate [M3], reworkability, and blocking resistance of the roll [R3] were evaluated using the adhesive sheet [K3] in the same manner as in Example 1. The evaluation results are shown in Table 1.

### [Example 4] Production of Adhesive Sheet [K8] Using Modified Hydrogenated Block Copolymer [E3]

An adhesive sheet [K8] having a thickness of 0.8 mm was prepared under the same conditions as in Example 1 except that the pellet [P4] obtained in Production Example 4 was used in place of the pellet [P1] obtained in Production Example 1 and that the cylinder temperature of the extruder was set to 200°C, the temperature of the T-die to 200°C, the temperature of the cast roll to 60°C, the temperature of the nip roll to 60°C, and the temperature of the cooling roll to 50°C. The adhesive sheet [K8] had an embossed shape on both sides. The obtained sheet [K8] was wound 100 m on a 3 inch core in the same manner as in Example 1 to prepare a roll [R8] and stored.

### (Evaluation of Adhesive Sheet [K8])

Thermal shrinkage, surface distortion and shrinkage cavity at the edge surface of a laminate [M8], reworkability, and blocking resistance of the roll [R8] were evaluated using the adhesive sheet [K8] in the same manner as in Example 1. The evaluation results are shown in Table 1.

### [Comparative Example 1] Production of Adhesive Sheet [K4] Using Modified Hydrogenated Block Copolymer [E1]

An adhesive sheet [K4] having a thickness of 0.8 mm was prepared in the same manner as in Example 1 except that the nip roll having a rubber surface was changed to a metallic nip roll having the same embossed shape as the rubber nip roll on the surface. The adhesive sheet [K4] had an embossed shape on both sides. The obtained sheet [K4] was wound in roll form in the same manner as in Example 1 to prepare a roll [R4] and stored.

### (Evaluation of Adhesive Sheet [K4])

Thermal shrinkage, surface distortion shrinkage cavity at the edge surface of a laminate [M4], reworkability, and blocking resistance of the roll [R4] were evaluated using the adhesive sheet [K4] in the same manner as in Example 1.

Thermal shrinkage of the adhesive sheet [K4] was bad (rank B), with low thermal shrinkage in the TD direction but thermal shrinkage of not less than 10% in the MD direction.

The edges of both the glass plates of the laminate [M4] were visually confirmed to warp toward the adhesive layer, and the evaluation of surface distortion was bad (rank B) with distortion being observed on a reflection image of parallel lines.

Shrinkage cavity at the edge surface of the laminate [M4] was bad (rank) with the shrinkage cavity of not less than 0.6 mm in depth.

Reworkability and blocking resistance were good (rank A).

The results are shown in Table 1.

### [Comparative Example 2] Production of Adhesive Sheet [K5] Using Modified Ethylene-Octene Copolymer

An adhesive sheet [K5] having a thickness of 0.8 mm was prepared as in Example 3 except that the pellet [P3] obtained in Production Example 3 was used in place of the pellet [P1] used in Comparative Example 1 and the nip roll was changed to the same metallic roll as used in Comparative Example 1. The adhesive sheet [K5] had an embossed shape on both sides. The obtained adhesive sheet [K5] was wound into roll form in the same manner as in Example 1 to prepare a roll [R5] and stored.

### (Evaluation of Adhesive Sheet [K5])

Thermal shrinkage, surface distortion and shrinkage cavity at the edge surface of a laminate [M5], reworkability, and blocking resistance of the roll [R5] were evaluated using the adhesive sheet [K5] in the same manner as in Example 1.

Thermal shrinkage of the adhesive sheet [K5] was bad (rank B), with low thermal shrinkage in the TD direction but thermal shrinkage of not less than 20% in the MD direction.

The edges of both the glass plates of the laminate [M5] were visually confirmed to warp toward the adhesive layer, and the evaluation of surface distortion was bad (rank B) with distortion being observed on a reflection image of parallel lines.

Shrinkage cavity at the edge surface of the laminate [M5] was bad (rank) with the shrinkage cavity of not less than 0.6 mm in depth.

The evaluations of reworkability and blocking resistance were good (rank A).

The results are shown in Table 1.

### [Comparative Example 3] Production of Adhesive Sheet [K6] Using Modified Hydrogenated Block Copolymer [E2]

An adhesive sheet [K6] having a thickness of 0.8 mm was prepared as in Example 2 except that the rubber nip roll having a Shore A hardness of 60 and an embossed shape on the surface was changed to a rubber roll having a Shore A hardness of 60 and a smooth surface. The adhesive sheet [K6] had an embossed shape on one side and a smooth surface on the other side. The obtained adhesive sheet [K6] was wound into roll form in the same manner as in Example 1 to prepare a roll [R6] and stored.

### (Evaluation of Adhesive Sheet [K6])

Thermal shrinkage, surface distortion and shrinkage cavity at the edge surface of a laminate [M6], reworkability, and blocking resistance of the roll [R6] were evaluated using the adhesive sheet [K6] in the same manner as in Example 1.

Thermal shrinkage of the adhesive sheet [K6] was good (rank A) with thermal shrinkage of not greater than 5% both in the MD and TD directions.

Surface distortion of the laminate [M6] formed using the adhesive sheet [K6] was good (rank A) with sufficiently small distortion. Further, the shrinkage cavity at the edge surface was less than 0.6 mm in depth and evaluated as being good (rank A).

Reworkability was bad (rank B) because the smooth surface of the adhesive sheet weakly stuck to the glass surface making it difficult to displace the adhesive sheet in a direction perpendicular to the lamination direction of the laminate.

Blocking resistance was bad (rank B) because there was a resistance to unroll the roll [R6] and sheet deformation occurred.

The results are shown in Table 1.

### [Comparative Example 4] Production of Adhesive Sheet [K7] Using Modified Hydrogenated Block Copolymer [E1]

An adhesive sheet [K7] having a thickness of 0.8 mm was prepared as in Example 1 except that the metallic cast roll having an embossed shape on the surface was changed to a metallic roll having a mirror surface. The adhesive sheet [K7] had an embossed shape on one side and a smooth surface on the other side. The obtained adhesive sheet [K7] was wound into roll form in the same manner as in Example 1 to prepare a roll [R7] and stored.

### (Evaluation of Adhesive Sheet [K7])

Thermal shrinkage, surface distortion and shrinkage cavity at the edge surface of a laminate [M7], reworkability, and blocking resistance of the roll [R7] were evaluated using the adhesive sheet [K7] in the same manner as in Example 1.

Thermal shrinkage of the adhesive sheet [K7] was good (rank A) with thermal shrinkage of not greater than 5% both in the MD and TD directions.

Surface distortion of the laminate [M7] formed using the adhesive sheet [K7] was good (rank A) with sufficiently small distortion. Further, the shrinkage cavity at the edge surface was less than 0.6 mm in depth and evaluated as being good (rank A).

Reworkability was bad (rank B) because the smooth surface of the adhesive sheet weakly stuck to the glass surface making it difficult to displace the adhesive sheet in a direction perpendicular to the lamination direction of the laminate.

Blocking resistance was bad (rank B) because there was a resistance to unroll the roll [R7] and sheet deformation occurred.

The results are shown in Table 1.

**Table 1**

| | | Ex. 1 | Ex. 2 | Ex. 3 | Ex. 4 | Comp. Ex. 1 | Comp. Ex. 2 | Comp. Ex. 3 | Comp. Ex. 4 |
|---|---|---|---|---|---|---|---|---|---|
| Resin pellet | | P1 | P2 | P3 | P4 | P1 | P3 | P2 | P1 |
| Cast roll | Material | Metal | Metal | Metal | Metal | Metal | Metal | Metal | Metal |
| | Embossed surface | Yes | Yes | Yes | Yes | Yes | Yes | Yes | No |
| Nip roll | Material | Rubber | Rubber | Rubber | Rubber | Metal | Metal | Rubber | Rubber |
| | Embossed surface | Yes | Yes | Yes | Yes | Yes | Yes | No | Yes |
| Evaluation of thermal shrinkage | | A | A | A | A | B | B | A | A |
| Evaluation of laminate | Surface distortion | A | A | A | A | B | B | A | A |
| | Shrinkage cavity at edge surface | A | A | A | A | B | B | A | A |
| Evaluation of reworkability | | A | A | A | A | A | A | B | B |
| Evaluation of blocking resistance | | A | A | A | A | A | A | B | B |

The results of Examples and Comparative Examples reveal that the double side embossed adhesive sheets [K], produced by contacting one side of a melt which comprises a thermoplastic rein as a main component with a surface of a metallic cast roll having an embossed shape on the surface while nipping the melt from the opposite side with a rubber nip roll having an embossed shape on the surface, were good (rank A) in all of thermal shrinkage, surface distortion and shrinkage cavity at the edge surface of the laminate [M], reworkability, and blocking resistance of the roll [R] (Examples 1 to 4).

In contrast, the double side embossed adhesive sheets [K], produced by the use of a nip roll having an embossed shape on the surface but is made of metal, were good (rank A) in reworkability and blocking resistance of the roll [R], but showed high thermal shrinkage and were also bad (rank B) in surface distortion and shrinkage cavity at the edge surface of the laminate [M] (Comparative Examples 1 and 2).

The adhesive sheets [K] having a smooth surface on one side, produced by the use of a metallic roll and a rubber nip roll one of which does not have an embossed shape on the surface, were good (rank A) in thermal shrinkage and surface distortion and shrinkage cavity at the edge surface of the laminate [M], but were bad (rank B) in reworkability and blocking resistance of the roll [R] (Comparative Examples 3 and 4).

### INDUSTRIAL APPLICABILITY

The adhesive sheet obtained by the production method of the present disclosures shows low thermal shrinkage at temperatures used for example in a production process of a laminate such as laminated glass. Thus, when laminated glass is manufactured using this adhesive sheet, air bubbles or unfilled space do no easily occur at the edge of the laminated glass. Further, when lightweight laminated glass formed of thin glass plates is manufactured using this adhesive sheet, warping does not easily occur at the edge surface.

Further, because the adhesive sheet obtained by the production method of the present disclosure has an embossed shape on both sides, blocking does not easily occur even when the adhesive sheet is rolled and stored for a long period of time. Further, when a laminate such as laminated glass is to be manufactured using this adhesive sheet, alignment is easy because favorable slipperiness is established between the glass surface and adhesive sheet surface or, when a plurality of such adhesive sheets is used, between the plurality of adhesive sheets. Thus, the adhesive sheet provides good work efficiency.

### REFERENCE SIGNS LIST

1 ... T-die
2 ... Cast roll
3 ... Nip roll
4 ... Cooling roll
5 ... Float glass (1.1 mm thick)
6 ... Adhesive layer
7... Reference line
8 ... Shortest distance between the bottom of the shrinkage cavity at the edge of adhesive sheet and the reference line 7
9 ... Adhesive sheet containing a thermoplastic resin as a main component

## Claims

1. A method for producing a double side embossed adhesive sheet which comprises a thermoplastic resin as a main component, the method comprising:
contacting one side of a melt which comprises a thermoplastic resin as a main component, extruded from a die, with a surface of a cast roll having an embossed shape on the surface while nipping the melt from an opposite side with a nip roll having an embossed shape on a surface thereof,
wherein one of the cast roll and the nip roll is made of metal and the other is made of rubber.

2. The method of claim 1, wherein the cast roll is made of metal and the nip roll is made of rubber.

3. The method of claim 1 or 2, wherein the thermoplastic resin is a modified hydrogenated block copolymer [E] obtained by introducing an alkoxysilyl group into a hydrogenated block copolymer [D], the hydrogenated block copolymer [D] being obtained by hydrogenating a block copolymer [C] comprising at least two polymer blocks [A] which comprise as a main repeating unit a repeating unit derived from an aromatic vinyl compound, and at least one polymer block [B] which comprises as a main repeating unit a repeating unit derived from a chain conjugated diene compound.
